# EUROPÄISCHE PATENTANMELDUNG

(11) **EP 3 064 602 A1**
(43) Veröffentlichungstag der Anmeldung: **07.09.2016**
(21) Anmeldenummer: 15157697.2
(22) Anmeldetag: 05.03.2015
(51) Int. Cl.: C22B 11/00

(54) **Verfahren zur Herstellung von elementarem Rhodium**

(71) Anmelder: Heraeus Deutschland GmbH & Co. KG, 63450 Hanau (DE)
(72) Erfinder: Stettner, Martin, 63674 Altenstadt (DE); Thiel, Vasco, 64832 Babenhausen (DE); Fuchs Alameda, Stefanie, 63599 Biebergemünd (DE); Voss, Steffen, 63694 Limeshain (DE)
(74) Vertreter: Heraeus IP

(57) **Zusammenfassung**

Verfahren zur Herstellung von elementarem Rhodium, umfassend die Schritte:
(1) Bereitstellen einer mit Halogenwasserstoffsäure auf einen pH-Wert von -1 bis +2 eingestellten wässrigen Suspension mindestens eines Salzes von aliphatischem Polyamin und Trihydrogenhexahalogenorhodiumsäure,
(2) Zugeben einer zur vollständigen Umsetzung des mindestens eines Salzes von aliphatischem Polyamin und Trihydrogenhexahalogenorhodiumsäure hinreichenden Menge an Reduktionsmittel zur in Schritt (1) bereitgestellten Suspension und Reagierenlassen bis zum Ende der Bildung elementaren Rhodiums, und
(3) Abtrennen des in Schritt (2) gebildeten elementaren Rhodiums aus der in Schritt (2) gebildeten halogenwasserstoffsauren wässrigen Zusammensetzung,
wobei Halogen Brom und/oder Chlor bedeutet.

## Beschreibung

Die vorliegende Erfindung betrifft ein Verfahren zur Herstellung von elementarem Rhodium aus Salzen von aliphatischem Polyamin und Trihydrogenhexahalogenorhodiumsäure.

Es ist bekannt, Rhodium bzw. Rh³⁺ im Rahmen der Edelmetallscheidung als schwerlösliches Salz von aliphatischem Polyamin und Trihydrogenhexahalogenorhodiumsäure von anderen Edelmetallen abzutrennen. Ein bekannter Vertreter solcher Salze ist das komplexe Salz von Diethylentriamin (DETA) und Trihydrogenhexachlororhodiumsäure, d.h. das Diethylentriammoniumhexachlororhodat der Formel H₃(DETA)RhCl₆ oder auch (H₃NC₂H₄NH₂C₂H₄NH₃)(RhCl₆). Es ist ferner bekannt, derartige Salze von aliphatischem Polyamin und Trihydrogenhexahalogenorhodiumsäure, zwecks weiterer Aufarbeitung, in Königswasser zu verkochen. Dabei werden die organischen Bestandteile im Wege einer Oxidation abgebaut und letztendlich eine saure wässrige Lösung von H₃RhCl₆ gebildet, die einer weiteren Raffination unterworfen werden kann. Eine weitere bekannte Alternative ist, die Salze von aliphatischem Polyamin und Trihydrogenhexahalogenorhodiumsäure in Sauerstoff enthaltender Atmosphäre zu kalzinieren und den Rhodium enthaltenden oxidischen Rückstand einer weiteren Raffination zu unterziehen.

Die vorliegende Erfindung besteht in einem Verfahren zur Herstellung von elementarem Rhodium, umfassend die Schritte:
(1) Bereitstellen einer mit Halogenwasserstoffsäure auf einen pH-Wert von -1 bis +2 eingestellten wässrigen Suspension mindestens eines Salzes von aliphatischem Polyamin und Trihydrogenhexahalogenorhodiumsäure,
(2) Zugeben einer zur vollständigen Umsetzung des mindestens eines Salzes von aliphatischem Polyamin und Trihydrogenhexahalogenorhodiumsäure hinreichenden Menge an Reduktionsmittel zur in Schritt (1) bereitgestellten Suspension und Reagierenlassen bis zum Ende der Bildung elementaren Rhodiums, und
(3) Abtrennen des in Schritt (2) gebildeten elementaren Rhodiums aus der in Schritt (2) gebildeten halogenwasserstoffsauren wässrigen Zusammensetzung,
wobei Halogen Brom und/oder Chlor, bevorzugt Chlor, bedeutet.

Die in der Beschreibung und in den Ansprüchen verwendeten Begriffe bzw. Abkürzungen "Halogen" oder "Hal" stehen für Brom und/oder Chlor, bevorzugt Chlor.

Die in der Beschreibung und den Ansprüchen verwendeten Begriffe "Halogenwasserstoffsäure" bzw. "halogenwasserstoffsauer" bedeuten Bromwasserstoffsäure und/oder Salzsäure (Chlorwasserstoffsäure), bevorzugt Salzsäure, bzw. bromwasserstoffsauer und/oder salzsauer (chlorwasserstoffsauer), bevorzugt salzsauer.

In Schritt (1) des erfindungsgemäßen Verfahrens wird eine mit Halogenwasserstoffsäure auf einen pH-Wert im Bereich von -1 bis +2, bevorzugt -0,5 bis +0,5 eingestellte wässrige Suspension mindestens eines Salzes von aliphatischem Polyamin und Trihydrogenhexahalogenorhodiumsäure bereitgestellt. Die pH-Wert-Bestimmung stellt keine besonderen Anforderungen und kann mit einem üblichen pH-Meter erfolgen.

Das mindestens eine Salz von aliphatischem Polyamin und Trihydrogenhexahalogenorhodiumsäure entstammt typischerweise der dem Fachmann bekannten Edelmetallscheidung oder, genauer gesagt, der Rhodiumabtrennung innerhalb der Edelmetallscheidung. Aufgrund seiner Schwerlöslichkeit in Wasser bzw. in halogenwasserstoffsaurem wässrigem Milieu kann das mindestens eine Salz von aliphatischem Polyamin und Trihydrogenhexahalogenorhodiumsäure dort im Rahmen der Rhodiumabtrennung isoliert werden.

Bei den Salzen von aliphatischem Polyamin und Trihydrogenhexahalogenorhodiumsäure handelt es sich beispielsweise um solche vom Typ [H₃N⁺(CnH₂ₙNH₂⁺)ₘCₙH₂ₙNH₃⁺](RhHal₆)³⁻, wobei m = 0, 1 oder 2, bevorzugt 1, und n = 2 oder 3, bevorzugt 2 sein kann. Ein bevorzugtes Beispiel ist das eingangs schon genannte Diethylentriammoniumhexachlororhodat mit n = 2, m = 1 und Hal = Cl.

Es kann beispielsweise so vorgegangen werden, dass man das mindestens eine Salz von aliphatischem Polyamin und Trihydrogenhexahalogenorhodiumsäure in Wasser suspendiert und Halogenwasserstoffsäure bis zur Einstellung eines pH-Wertes der wässrigen Suspension im Bereich von -1 bis +2 zugibt. Alternativ kann das mindestens eine Salz von aliphatischem Polyamin und Trihydrogenhexahalogenorhodiumsäure auch in eine einen pH-Wert im Bereich von -1 bis +2 aufweisende Halogenwasserstoffsäure gegeben und darin suspendiert werden.

Der Anteil des mindestens einen Salzes von aliphatischem Polyamin und Trihydrogenhexahalogenorhodiumsäure in der in Schritt (1) bereitgestellten wässrigen Suspension liegt beispielsweise im Bereich von 5 bis 40 Gew.-%, zweckmäßig 10 bis 30 Gew.-%, bezogen auf gesamte Suspension.

In Schritt (2) des erfindungsgemäßen Verfahrens wird eine zur vollständigen Umsetzung des mindestens einen Salzes von aliphatischem Polyamin und Trihydrogenhexahalogenorhodiumsäure hinreichende Menge an Reduktionsmittel zur in Schritt (1) bereitgestellten Suspension zugegeben und bis zum Ende der Bildung elementaren Rhodiums reagieren gelassen. Der Begriff "Suspension" bedeutet, dass das mindestens eine Salz von aliphatischem Polyamin und Trihydrogenhexahalogenorhodiumsäure dabei als Folge seiner Schwerlöslichkeit in Suspension vorliegt, die wässrige Suspension sich also in Bewegung befindet, beispielsweise gerührt wird.

Man kann ein oder mehrere Reduktionsmittel in Kombination verwenden. Im letzteren Fall können die Reduktionsmittel separat, d.h. zeitlich nacheinander, oder zugleich oder zeitlich überlappend zugegeben werden.

Als Reduktionsmittel eignen sich verschiedene oxidierbare Substanzen wie beispielsweise Hydrazin, Hydrazinhydrat, Sn(II)-Verbindungen wie SnCl₂, unedle Metalle wie Zink, Eisen, Aluminium, Zinn.

Bevorzugt wird Eisen als Reduktionsmittel verwendet, insbesondere in Form von Eisenpulver.

Die Zugabe des Reduktionsmittels kann exakt auf Basis stöchiometrischer Betrachtungen oder in einem gegenüber der Theorie aus praktischen Gründen gegebenenfalls notwendigen Überschuss erfolgen. Bevorzugt ist es, das oder die Reduktionsmittel portionsweise der bewegten, beispielsweise gerührten Suspension hinzuzufügen und den Fortgang der Reaktion im Sinne eines Verschwindens bzw. Auflösens des mindestens einen Salzes von aliphatischem Polyamin und Trihydrogenhexahalogenorhodiumsäure und der dazu parallel erfolgenden Bildung des elementaren Rhodiums zu beobachten. Der Reaktionsverlauf kann auch, beispielsweise ergänzend zur visuellen Verfolgung, analytisch verfolgt werden, beispielsweise durch Bestimmung des Rh³⁺-Gehaltes in der wässrigen Phase des Reaktionsgutes oder durch Messung des Redoxpotentials der wässrigen Phase des Reaktionsgutes. Insofern versteht der Fachmann den hierin verwendeten Ausdruck "hinreichende Menge an Reduktionsmittel" nicht im rein stöchiometrischen Sinne, sondern als an praktischen Gegebenheiten orientiert.

Es wird angenommen, dass die in Schritt (2) stattfindende Reduktionsreaktion am Beispiel von Diethylentriammoniumhexachlororhodat als Salz von aliphatischem Polyamin und Trihydrogenhexachlororhodiumsäure sowie Eisen als Reduktionsmittel wie folgt formuliert werden kann:

2 [H₃NC₂H₄NH₂C₂H₄NH₃](RhCl₆) + 3 Fe → 2 [H₃NC₂H₄NH₂C₂H₄NH₃]³⁺ + 3 Fe²⁺ + 2 Rh ↓ + 12 Cl⁻

Möglicherweise wirkt auch aus dem Eisen im halogenwasserstoffsauren Milieu des Reaktionsgutes gebildeter Wasserstoff als Reduktionsmittel; dies wurde jedoch nicht weiter untersucht.

Während des Schrittes (2) wird der pH-Wert der wässrigen Phase des Reaktionsgutes im Bereich von -1 bis +2, bevorzugt -0,5 bis +0,5 gehalten, wozu es notwendig sein kann, Halogenwasserstoffsäure in entsprechender Menge zuzugeben. Die Temperatur des Reaktionsgutes liegt während des Schrittes (2) beispielsweise in einem Bereich von 20 bis 70 °C, bevorzugt 40 bis 65 °C. Die Zeitdauer von Verfahrensschritt (2) liegt beispielsweise im Bereich von 2 bis 4 Stunden, wobei es zweckmäßig sein kann, nach der letzten Zugabe von Reduktionsmittel noch bis zur pH-Wert-Konstanz innerhalb des pH-Bereichs von -1 bis +2, bevorzugt -0,5 bis +0,5 nachzurühren, beispielsweise für 0,5 bis 2 Stunden bei 20 bis 70 °C, bevorzugt 40 bis 65 °C.

Das in Schritt (2) gebildete elementare Rhodium liegt partikulär vor, insbesondere als Rhodiumschwamm.

Nach Beendigung von Schritt (2) wird das gebildete elementare Rhodium in Schritt (3) aus der in Schritt (2) gebildeten halogenwasserstoffsauren wässrigen Zusammensetzung abgetrennt. Dabei können übliche dem Fachmann bekannte Fest-Flüssig-Trennverfahren eingesetzt werden, beispielsweise Dekantieren, Abhebern, Abfiltrieren oder geeignete Kombinationen solcher Trennverfahren.

Das abgetrennte elementare Rhodium kann zweckmäßigerweise mit Wasser gewaschen werden. Danach kann eine weitere Aufreinigung des Rhodiums, welches im erfindungsgemäßen Verfahren weitgehend von organischen Begleitstoffen frei oder vollständig frei davon anfällt, erfolgen. Beispielsweise ist eine Behandlung mit Chlor und Salzsäure unter Bildung einer wässrigen sauren Lösung von H₃RhCl₆ möglich, welches dann weiter gereinigt werden kann. Beispiele für geeignete Reinigungstechniken sind lonenaustausch, Extraktion und Elektrolyse.

Letztendlich erhält man mit der Substanz H₃RhCl₆ das gleiche Ergebnis wie im eingangs erwähnten bekannten Verfahren der Königswasserverkochung eines Salzes von aliphatischem Polyamin und Trihydrogenhexachlororhodiumsäure.

Das bei der Abtrennung des elementaren Rhodiums aus der in Schritt (2) gebildeten halogenwasserstoffsauren wässrigen Zusammensetzung erhaltene halogenwasserstoffsaure Filtrat, welches Kationen in Form des vollständig protonierten mindestens einen aliphatischen Polyamins sowie Halogenidanionen enthält, kann, abhängig von der Art des in Schritt (2) verwendeten Reduktionsmittels, auch oxidiertes Reduktionsmittel bzw. Oxidationsprodukte davon enthalten. Solches oxidiertes Reduktionsmittel oder Oxidationsprodukte des oder der Reduktionsmittel können bei Bedarf beispielsweise durch eine geeignete Fällungsreaktion aus dem Filtrat entfernt werden; eine zwingende Notwendigkeit dazu besteht jedoch nicht. Das halogenwasserstoffsaure Filtrat kann im Zuge eines weiteren Verfahrensschrittes (4) in der Edelmetallscheidung zur Fällung von Rh³⁺ als Salz von aliphatischem Polyamin und Trihydrogenhexahalogenorhodiumsäure verwendet bzw. wiederverwendet werden.

Ein Vorteil des erfindungsgemäßen Verfahrens ist die Vermeidung des eingangs erwähnten Verkochens der Salze von aliphatischem Polyamin und Trihydrogenhexahalogenorhodiumsäure in Königswasser. Insofern wird auch die Entstehung und die im Zuge dessen erforderlich werdende Beseitigung nitroser Gase vermieden. Ein weiterer Vorteil ist, wie schon gesagt, dass das aliphatische Polyamin in mit Halogenwasserstoffsäure protonierter wässriger Form als Lösung wiedergewonnen und erneut in der Edelmetallscheidung zur Fällung von Rh³⁺ als schwerlösliches Salz von aliphatischem Polyamin und Trihydrogenhexahalogenorhodiumsäure verwendet werden kann.

### Beispiele

### Beispiel 1:

30 g festes Diethylentriammoniumhexachlororhodat wurden in 150 ml Wasser suspendiert, die Suspension auf 60°C erhitzt und mit 10N Salzsäure auf pH 0,5 eingestellt. Danach wurden unter Rühren der Suspension 10 g Eisenpulver portionsweise zugegeben und auf 60 °C gehalten. Während der Eisenzugabe wurde der pH-Wert kontrolliert und durch Zugabe von 10N Salzsäure auf 0 bis -0,5 gehalten. Es wurde noch 2 Stunden bei 60°C nachgerührt. Durch Abnutschen wurde das Reaktionsgut in elementares Rhodium in Form von Rhodiumschwamm und ein saures wässriges Filtrat, welches gelöstes Diethylentriammoniumchlorid enthielt, getrennt. Der Rhodiumschwamm wurde mit Wasser gewaschen und der weiteren Raffination mittels Chlor und Salzsäure zugeführt; Rhodiumausbeute bezogen auf den Rhodiumgehalt des eingesetzten Diethylentriammoniumhexachlororhodats: >99%.

### Beispiel 2:

30 g festes Diethylentriammoniumhexachlororhodat wurden in 200 ml Wasser suspendiert, die Suspension auf 60°C erhitzt und mit 10N Salzsäure auf pH 0,2 eingestellt. Danach wurden unter Rühren der Suspension 10 g Eisenpulver portionsweise zugegeben und auf 60 °C gehalten. Während der Eisenzugabe wurde der pH-Wert kontrolliert und durch Zugabe von 10N Salzsäure auf 0 bis -0,5 gehalten. Es wurde noch 2 Stunden nachgerührt. Durch Abnutschen wurde das Reaktionsgut in elementares Rhodium in Form von Rhodiumschwamm und ein saures wässriges Filtrat, welches gelöstes Diethylentriammoniumchlorid enthielt, getrennt. Der Rhodiumschwamm wurde mit Wasser gewaschen und der weiteren Raffination mittels Chlor und Salzsäure zugeführt; Rhodiumausbeute bezogen auf den Rhodiumgehalt des eingesetzten Diethylentriammoniumhexachlororhodats: >99%.

## Patentansprüche

1. Verfahren zur Herstellung von elementarem Rhodium, umfassend die Schritte:
(1) Bereitstellen einer mit Halogenwasserstoffsäure auf einen pH-Wert von -1 bis +2 eingestellten wässrigen Suspension mindestens eines Salzes von aliphatischem Polyamin und Trihydrogenhexahalogenorhodiumsäure,
(2) Zugeben einer zur vollständigen Umsetzung des mindestens eines Salzes von aliphatischem Polyamin und Trihydrogenhexahalogenorhodiumsäure hinreichenden Menge an Reduktionsmittel zur in Schritt (1) bereitgestellten Suspension und Reagierenlassen bis zum Ende der Bildung elementaren Rhodiums, und
(3) Abtrennen des in Schritt (2) gebildeten elementaren Rhodiums aus der in Schritt (2) gebildeten halogenwasserstoffsauren wässrigen Zusammensetzung,
wobei Halogen Brom und/oder Chlor bedeutet.

2. Verfahren nach Anspruch 1,
wobei der pH-Wert der in Schritt (1) bereitgestellten Suspension im Bereich von - 0,5 bis +0,5 liegt.

3. Verfahren nach Anspruch 1 oder 2,
wobei das mindestens eine Salz von aliphatischem Polyamin und Trihydrogenhexahalogenorhodiumsäure der Rhodiumabtrennung innerhalb der Edelmetallscheidung entstammt.

4. Verfahren nach einem der vorhergehenden Ansprüche,
wobei man das mindestens eine Salz von aliphatischem Polyamin und Trihydrogenhexahalogenorhodiumsäure in Wasser suspendiert und Halogenwasserstoffsäure bis zur Einstellung eines pH-Wertes der wässrigen Suspension im Bereich von -1 bis +2 zugibt oder das mindestens eine Salz von aliphatischem Polyamin und Trihydrogenhexahalogenorhodiumsäure in eine einen pH-Wert im Bereich von -1 bis +2 aufweisende Halogenwasserstoffsäure gibt und darin suspendiert.

5. Verfahren nach einem der vorhergehenden Ansprüche,
wobei der Anteil des mindestens einen Salzes von aliphatischem Polyamin und Trihydrogenhexahalogenorhodiumsäure in der in Schritt (1) bereitgestellten wässrigen Suspension im Bereich von 5 bis 40 Gew.-% liegt.

6. Verfahren nach einem der vorhergehenden Ansprüche,
wobei sich die wässrige Suspension während Schritt (2) in Bewegung befindet.

7. Verfahren nach einem der vorhergehenden Ansprüche,
wobei ein Reduktionsmittel oder eine Kombination von Reduktionsmitteln verwendet wird und die Reduktionsmittel im Falle der Kombination von Reduktionsmitteln zeitlich nacheinander, zugleich oder zeitlich überlappend zugegeben werden.

8. Verfahren nach einem der vorhergehenden Ansprüche,
wobei das oder die Reduktionsmittel ausgewählt sind aus der aus Hydrazin, Hydrazinhydrat, Sn(II)-Verbindungen, Zink, Eisen, Aluminium und Zinn bestehenden Gruppe.

9. Verfahren nach einem der Ansprüche 1-7,
wobei Eisenpulver als Reduktionsmittel verwendet wird.

10. Verfahren nach einem der vorhergehenden Ansprüche,
wobei der pH-Wert während des Schrittes (2) im Bereich von -1 bis +2 gehalten wird, gegebenenfalls unter Zugabe von Halogenwasserstoffsäure.

11. Verfahren nach einem der vorhergehenden Ansprüche,
wobei die Temperatur des Reaktionsgutes während des Schrittes (2) im Bereich von 20 bis 70 °C gehalten wird.

12. Verfahren nach einem der vorhergehenden Ansprüche,
wobei das bei der Abtrennung des elementaren Rhodiums erhaltene halogenwasserstoffsaure Filtrat in einem Schritt (4) in der Edelmetallscheidung zur Fällung von Rh³⁺ als Salz von aliphatischem Polyamin und Trihydrogenhexahalogenorhodiumsäure verwendet wird.

13. Verfahren nach Anspruch 12,
wobei das halogenwasserstoffsaure Filtrat vor der Verwendung in Schritt (4) zunächst von oxidiertem Reduktionsmittel oder Oxidationsprodukten des oder der Reduktionsmittel befreit wird.

14. Verfahren nach einem der vorhergehenden Ansprüche,
wobei das mindestens eine Salz von aliphatischem Polyamin und Trihydrogenhexahalogenorhodiumsäure ein Salz vom Typ [H₃N⁺(CₙH₂ₙNH₂⁺)ₘCₙH₂ₙNH₃⁺](RhHal₆)³⁻ mit m = 0, 1 oder 2 und n = 2 oder 3 ist.

15. Verfahren nach einem der vorhergehenden Ansprüche,
wobei das mindestens eine Salz von aliphatischem Polyamin und Trihydrogenhexahalogenorhodiumsäure Diethylentriammoniumhexachlororhodat umfasst oder ist.
